(19) **Europäisches Patentamt**
**European Patent Office**
**Office européen des brevets**

(11) **EP 3 561 218 A1**

(12) **EUROPEAN PATENT APPLICATION**

(43) Date of publication:
**30.10.2019 Bulletin 2019/44**

(51) Int Cl.:
**E21B 17/10** (2006.01)          **B65D 59/06** (2006.01)
**F16L 57/00** (2006.01)          **F16L 57/06** (2006.01)

(21) Application number: **18305517.7**

(22) Date of filing: **26.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Vallourec Oil and Gas France
59620 Aulnoye-Aymeries (FR)**

(72) Inventors:
• **BRODIE, Alastair John
  92100 Boulogne-Billancourt (FR)**
• **YOSHIDA SCHNEIDER DA SILVA, Fabio
  92100 Boulogne-Billancourt (FR)**

(74) Representative: **Casalonga
Casalonga & Partners
Bayerstraße 71/73
80335 München (DE)**

(54) **PROTECTIVE DEVICE FOR A COUPLING BOX PORTION OF A STEEL TUBE INTENDED FOR USE IN A TUBULAR HYDROCARBON WORKING STRING**

(57)     This protective device (2) for a coupling box portion (20) of a steel tube (4) intended for use in a tubular hydrocarbon working string includes a cylindrical sleeve portion (28) defining an inner cavity (60) intended to receive the coupling box portion (20).

The protective device (2) is so configured to surround the coupling box portion (20).

FIG.4

## Description

The present invention relates to a protective device for a coupling box portion of a steel tube intended for use in a tubular hydrocarbon working string, and to a steel tube equipped with such a protective device.

A tubular hydrocarbon working string generally consists of a plurality of tubes attached one by one. More specifically, a tubular hydrocarbon working string for hydrocarbon wells or similar wells generally includes a tubing string and several casing strings. The tubing string consists of a plurality of completion tubes accommodated inside the casing string. The casing string consists of a plurality of casing tubes arranged inside the drilling hole of the well. The casing tubes have a larger diameter cross-section than the completion tubes and surround the completion tubes. In the lower part of the casing string, the casing tubes are also called liner tubes.

Two tubes of a string may be attached by threaded joint. A typical threaded joint for connecting a first tube to a second tube may include a male threaded portion formed on the outer peripheral surface of the first tube and a female threaded portion formed on the inner peripheral surface of the second tube. The threaded portions cooperate so as to attach the first tube to the second tube, thus forming a threaded joint.

Another known type of threaded joint may include a coupling box for attaching a first tube and a second tube. Each tube includes a pipe having, at both ends thereof, a male threaded portion formed on the outer peripheral surface. The first tube includes a coupling box having an inner hole with a female threaded portion formed on the inner periphery of the hole. The coupling box is previously connected to one end of the steel pipe by means of the male threaded portion of said end and the female threaded portion of the coupling box. By way of this arrangement, the first tube has a male threaded portion and a coupling box portion with a female threaded portion. The second tube may be attached to the first tube in order to form a working string.

The solidity of a string of tubes generally relies on the absence of wear on the parts or portions forming the threaded joint. It has therefore been proposed devices for protecting the threaded portions of tubes having a male threaded portion and a female threaded portion. By comparison, few devices are adapted for protecting threaded joints including a coupling box.

Conventional devices for protecting threaded joints solely protect the female threaded portion of the coupling box. Hence, impacts or wear on other parts of the coupling box portion may cause a failure of the threaded joint and/or of the working string. Moreover, it is necessary to remove the device prior to installing the tube in a well. The installation process of the working string is thus rendered more complicated by the use of such a device and the weak points of a tube are not protected during installation of the working string.

One aim of the present invention is to overcome the aforementioned drawbacks.

It is a particular object of the invention to improve the protection of the coupling box portion of a tube intended to form a threaded joint, while facilitating an installation process of the tube.

According to one aspect of the invention, it is proposed a protective device for a coupling box portion of a steel tube intended for use in a tubular hydrocarbon working string, the device including a cylindrical sleeve portion defining an inner cavity intended to receive the coupling box portion.

According to one of its general features, the protective device is so configured to surround the coupling box portion.

By means of such a device, the coupling box portion of a tube intended to be attached by a threaded joint, and in particular an outer periphery of the coupling box portion, is protected. In other words, the protective device encloses the coupling box portion. Furthermore, there is no longer need to remove the device prior to installation of the tube. As a result, the process of installing a working string may be facilitated and the tube is protected during this installation process.

Preferably, the axial length of the cylindrical sleeve portion is within a range 145 mm to 305 mm.

Such lengths are adapted to typical axial dimensions of coupling box portions. This allows the device to protect in particular a shoulder of the coupling box portion.

In one embodiment, the cylindrical sleeve portion is radially outwardly delimited by an outer cylindrical surface having a circular radial cross-section.

In the present application, the wording "outwardly delimited" shall be understood in such a way that, for a solid outwardly delimited by a first surface, the first surface is globally common with an outer surface of the solid, being not excluded that the outer surface of the solid may be locally inwardly offset with respect to the first surface.

With such a device, it is possible to centre the tube within a surrounding cylindrical wall. In particular, when used with a completion tube, the device centres the tube with respect to the casing string. When used with a casing tube, the device centres the tube with respect to a drill hole of the well. Thus, such a device allows installing tubes so as to form a tubing string or a casing string without using a centraliser.

Preferably, the diameter of the radial cross-section of the outer cylindrical surface is within a range 113,3 mm (4,46 inch) to 115,3 mm (4,54 inch), or within a range 126 mm (4,96 inch) to 128 mm (5,04 inch), or within a range 138,7 mm (5,46 inch) to 140,7 mm (5,54 inch), or within a range 176,8 mm (6,96 inch) to 178,8 mm (7,04 inch), or within a range 243,475 mm (9,58 inch) to 245,475 mm (9,66 inch), or within a range 338,725 mm (13.33 inch) to 340,725 mm (13.41 inch).

Such ranges are adapted to typical diameters of casing tubes, liners or drill bits. The so-defined diameters allow a more efficient centring of the tube with respect to a casing string of to a drill hole of a well.

In another embodiment, the inner cavity comprises a distal shoulder surface and a proximal shoulder surface.

In an embodiment, the proximal shoulder surface is part of at least two snap-fit connectors, the number of snap-fit connectors being preferably within a range 4 to 12, and more preferably within a range 6 to 10.

The protective device may be secured to the coupling box portion in an easy way adapted to tubes intended to be attached by a threaded joint with a coupling box.

It may also be foreseen at least one outer axial groove being radially adjacent to an outer surface of the cylindrical sleeve portion. The number of outer axial grooves may preferably be within a range 4 to 12, and more preferably within a range 6 to 10.

As will be explained later, such a groove makes it easier to install the working string, regardless of whether the working string is a tubing string or a casing string. When used with a completion tube, control lines and drilling fluid may go through the device via said groove so as to allow data connection with sensors placed along the tubing string and to facilitate the lowering of the tubing string inside the casing string. When used with a casing tube or a liner, wet cement and drilling fluid may flow through the device via said groove so as to facilitate the lowering of the casing string inside the drill hole and the pouring of cement between the casing string and the drill hole.

Preferably, an overall radial cross-section area of said at least one outer axial groove equals an area of the radial cross-section of the cylindrical sleeve portion multiplied by a coefficient, the coefficient being within a range 0,4 to 0,6.

Such a coefficient enables a good communication of fluid through the device while avoiding to reduce the solidity thereof.

The cylindrical sleeve portion may include an annular groove extending radially inwardly from an outer surface of the cylindrical sleeve portion, the device comprising a metallic cylindrical envelope located within the annular groove.

Such an envelope helps to maintain control lines within outer axial grooves.

In one embodiment, the axial cross-section of the metallic cylindrical envelope forms an arc of a circle about the axial direction of the cylindrical sleeve portion, the arc being within a range 320° to 350°.

Such a cross-section allows inserting a control line in an outer axial groove. The range of the arc of a circle allows using a maximum of outer axial grooves for accommodating control lines.

In another embodiment, the axial cross-section of the metallic cylindrical envelope is tangentially delimited by a first end and by a second end, at least one of the first and second ends radially inwardly protruding so as to form a means for rotationally locking the metallic cylindrical envelope with respect to the cylindrical sleeve portion.

In a specific embodiment, the device further includes a hollow proximal portion axially protruding from the cylindrical sleeve portion. The hollow proximal portion is radially inwardly delimited by an internal cylindrical surface and radially outwardly delimited by an external tapered surface, the external tapered surface forming an angle within a range 15° to 50° with respect to the axis of the internal cylindrical surface. The axial length of the hollow proximal portion is preferably within a range 20 mm to 55 mm.

Such a hollow distal portion forms a frustoconical funnel in order to help inserting the male portion of a following tube in the coupling box portion of the present tube.

Advantageously, the device further includes a hollow distal portion axially protruding from the cylindrical sleeve portion. The hollow distal portion is radially outwardly delimited by an external cylindrical surface and radially inwardly delimited by an internal tapered surface, the internal tapered surface forming an angle within a range 20° to 45° with respect to the axis of the external cylindrical surface. The axial length of the hollow distal portion is preferably within a range 70 mm to 205 mm.

The hollow proximal portion forms a frustoconical chamfer making it easier to insert the present tube in the drill or in the surrounding casing string, as the case may be. When used with a completion tube, the device avoids an impact generally encountered between a shoulder of the coupling box portion and an upper axial end of the casing string. When used with a casing tube, the device avoids an impact generally encountered between a shoulder of the coupling box portion and an upper axial end of the drill hole.

In another embodiment, the protective device further includes a radio frequency identification chip.

It may also be foreseen a pressure or temperature sensor, the sensor being preferably arranged on the cylindrical sleeve portion, and more preferably arranged on an internal tapered surface of a hollow distal portion axially protruding from the cylindrical sleeve portion.

Such a sensor allows monitoring the pressure or the temperature within the casing string or the tubing string without implementing a step of installing such a sensor during installation of the tube, and allows monitoring transport or storage conditions of the tube. The sensor arranged on the cylindrical sleeve portion allows detecting that an excessive stress and/or an excessive temperature have occurred on the outer periphery of the coupling box portion. The sensor arranged on an internal tapered surface also allows monitoring the pressure and/or temperature of the drilling fluid or of the cement, as the case may be.

In another embodiment, the protective device is made of a material including a polymer.

Such material enables a suitable absorption of the energy of an impact of an upper axial end of a casing string or a tubing string with the device.

In another embodiment, the protective device is manufactured by an additive manufacturing means.

Such manufacturing means enables the manufacturing of shapes that are difficult to obtain with molding technics.

According to another aspect of the invention, it is proposed a steel tube intended for use in a tubular hydrocarbon working string, preferably as a completion tube, said tube including a male portion and a coupling box portion so adapted to receive a male portion of another steel tube, and a protective device as set forth above.

The present invention and its advantages will be better understood by studying the detailed description of a specific embodiment given by way of nonlimiting examples and illustrated by the appended drawings on which:

- figure 1 is a tridimensional view of a protective device according to one aspect of the invention,
- figure 2 is an radial view of the device of figure 1,
- figure 3 is a longitudinal cross-sectional view of the device of figures 1 and 2 along plane III-III,
- figure 4 is a longitudinal cross-sectional view of the device of figures 1 to 3 along plane IV-IV,
- figure 5 is a partial longitudinal cross-sectional view of a completion steel tube according to another aspect of the invention, including the device of figures 1 to 4, along the same plane II-II than figure 3, and
- figure 6 is a partial longitudinal cross-sectional view of a casing steel tube according to another embodiment, including a protective device similar to the device of figures 1 to 4, along the same plane III-III than figures 3 and 5.

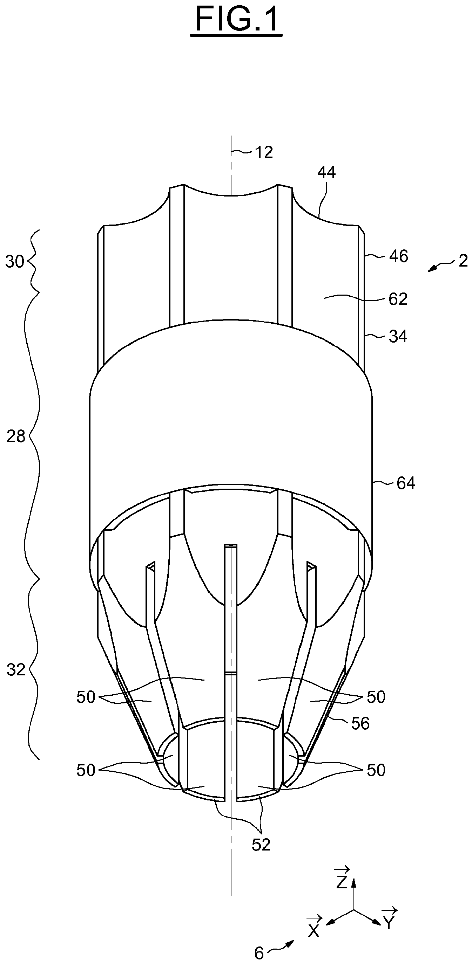

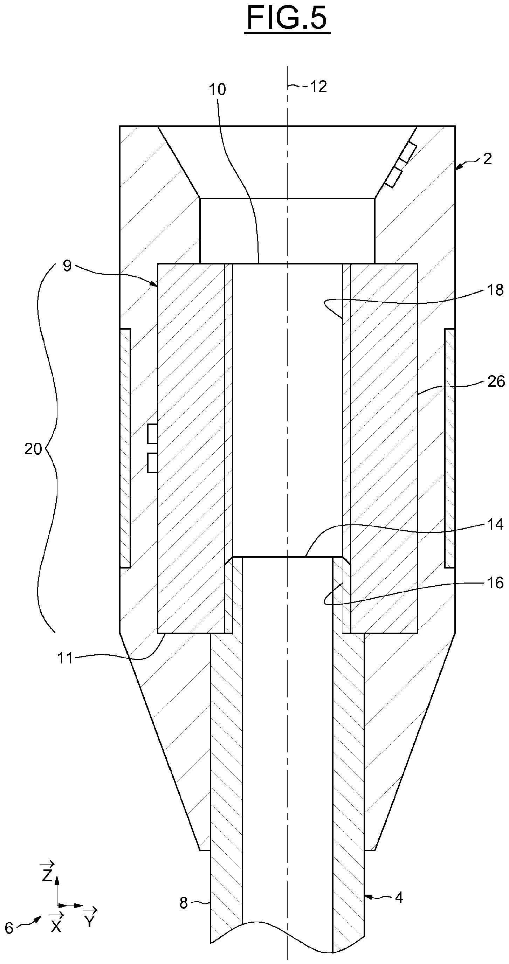

With reference to figure 1 to 4, it is schematically depicted a protective device 2. The device 2 aims at protecting a portion of a steel tube 4, in particular of a completion steel tube. The device 2 is depicted together with the completion steel tube 4 on figure 5.

It is defined an orthonormal direct vector base 6 attached to the device 2. The base 6 consists of a vector $\vec{x}$, a vector $\vec{y}$ and a vector $\vec{z}$. The device 2 and the tube 4 are globally axisymmetric with respect to an axis parallel to vector $\vec{z}$. The cross-section planes III-III and IV-IV include the vector $\vec{z}$. The cross-section plane IV-IV is perpendicular to the vector $\vec{x}$.

In the present application, terms "lower", "upper", "horizontal" and "vertical" will be understood as referring relative to the base 6 when the device 2 and the tube 4 are normally installed in a casing string or a drill hole, that is assuming that the vector $\vec{z}$ is vertically upwardly directed.

Unless contrary indication, the words "axial", "axially", "radial", "radially", "tangential" and "tangentially" will be understood as referring relative to the vertical axis of symmetry of the device 2, that is to the direction of the vector $\vec{z}$.

As well, the word "cylindrical" will be understood according to its common definition, being namely that a cylindrical surface is a surface consisting of all the points on all the lines which are parallel to a given line and which pass through a fixed curve in a plane not parallel to the given line.

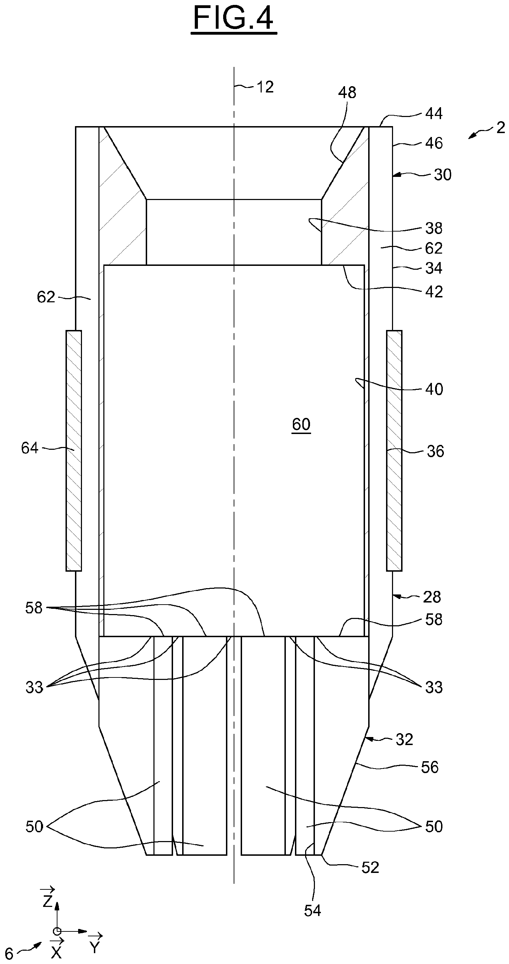

Referring to figure 4, the tube 4 includes a pipe 8 and a coupling box 9.

The pipe 8 has a substantially cylindrical shape about an axis 12 parallel to the vector $\vec{z}$. The pipe 8 has a circular horizontal cross-section. The pipe 8 includes a male threaded portion on the outer periphery of its lower end (not depicted). The pipe 8 includes a male threaded portion 16 on the outer periphery of its upper end 14.

The coupling box 9 forms a sleeve having a substantially cylindrical shape about the axis 12. The coupling box 9 extends axially between an upper, frontal axial surface 10 and a lower, frontal axial surface 11. The coupling box 9 is radially inwardly delimited by an inner cylindrical surface (not referenced) having female threads 18. The female threads 18 are adapted for cooperating with the male threaded portion 16 and with a male threaded portion of a lower end of a pipe 8 of a following steel tube (not depicted).

As depicted on figure 5, the coupling box 9 is screwed on the upper end 14 of the pipe 8. By virtue of this arrangement, the pipe 8 and the coupling box 9 form the steel tube 4 having an upper coupling box portion 20. The portion 20 is axially, downwardly delimited by the surface 11 forming a shoulder with the outer periphery of the pipe 8. The portion 20 is radially, outwardly delimited by an outer cylindrical surface 26.

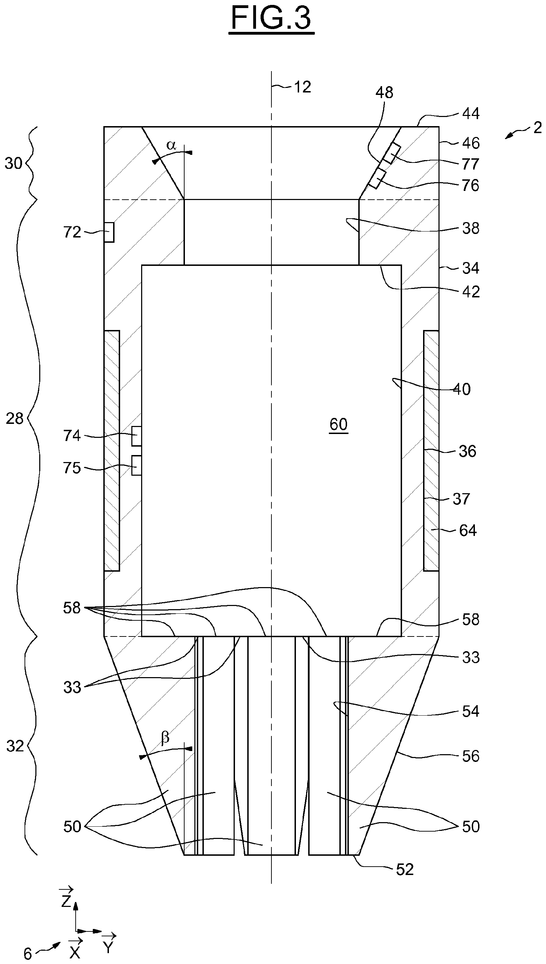

With reference to figures 1, 3 and 4, the device 2 includes a cylindrical sleeve portion 28, a hollow upper portion 30 and a hollow lower portion 32. When the device 2 is arranged on a tube 4, the portion 32 is proximal to the pipe 8 whereas the portion 30 is distal to the pipe 8. The limits between the portions 28, 30 and 32 are depicted on figure 3 by dashed lines. As may be seen on figures 1, 3 and 4, the portion 30 protrudes axially upwardly from the portion 28. As well, the portion 32 protrudes axially downwardly from the portion 28.

The portion 28 forms a cylinder having a horizontal circular cross-section about the axis 12. More specifically, the portion 28 is radially, outwardly delimited by an outer cylindrical surface 34. The surface 34 is cylindrical about the axis 12 and has a circular radial cross-section with a diameter $d_{34}$. The surface 34 has a length $l_{34}$ along the direction of the vector $\vec{z}$. Preferably, the length $l_{34}$ is within a range 145 mm to 155 mm or within a range 295 mm to 305 mm.

An annular groove 36 is made in the portion 28, extending radially inwardly from the surface 34. The groove 36 is visible on figures 3 and 4. The groove 36 is radially inwardly delimited by a cylindrical surface 37. The surface 37 is cylindrical about the axis 12 and has a circular radial cross-section with a diameter $d_{37}$ smaller than the diameter $d_{34}$. The surface 37 has a length $l_{37}$ along the direction of the vector $\vec{z}$.

The portion 28 is axially downwardly delimited by a lower, frontal axial surface 33. The portion 28 is radially inwardly delimited by an upper, inner cylindrical surface 38 and by a lower, inner cylindrical surface 40. The surfaces 38, 40 are cylindrical about the axis 12 and have a circular radial cross-section with a respective diameter $d_{38}$, $d_{40}$. The diameter $d_{38}$ is smaller than the diameter $d_{40}$. The portion 28 further includes an axial, frontal surface 42 forming an annular shoulder connecting the surfaces 38 and 40.

The portion 30 is axially delimited by an upper, frontal axial surface 44. The portion 30 is radially outwardly delimited by an external cylindrical surface 46. The surface 46 is cylindrical about the axis 12 and has a circular radial cross-section with a diameter $d_{46}$. The diameters $d_{34}$ and $d_{46}$ are equals. The length $l_{46}$ of the surface 46 along the direction of the vector $\vec{z}$ is preferably within a range 70 mm to 80 mm or within a range 195 mm to 205 mm. The portion 30 is radially, inwardly delimited by an internal tapered surface 48. The surface 48 forms a cone frustum about the axis 12. The surface 48 extends between an upper end having a larger diameter $d_{48l}$ and a lower end having a smaller diameter $d_{48s}$. The surface 48 forms an angle $\alpha$ with the axis 12, said angle $\alpha$ being within a range 27° to 35°, preferably within a range 29° to 32°.

The portion 32 is axisymmetric about the axis 12. More specifically, the portion 32 includes eight snap-fit connectors 50. Nonetheless, the portion 32 may include a different number of snap-fit connectors. The portion 32 may in particular include an odd number of snap-fit connectors. In such case, the portion 32 is not axisymmetric. The snap-fit connectors 50 extend axially downwardly from the surface 33. The eight snap-fit connectors 50 are circumferentially spread over the frontal surface 33.

With reference to figure 3, the portion 32 is axially upwardly delimited by the plane of the surface 33. The portion 32 is axially downwardly delimited by a lower, frontal axial surface 52. The snap-fit connectors 50 are radially inwardly delimited by a common internal cylindrical surface 54. The surface 54 is cylindrical about the axis 12 and has a circular radial cross-section with a diameter $d_{54}$. The diameter $d_{54}$ is less than the $d_{40}$. The length $l_{54}$ of the surface 54 along the direction of the vector $\vec{z}$ is preferably within a range 20 mm to 30 mm or within a range 45 mm to 55 mm. The snap-fit connectors 50 are radially outwardly delimited by a common external tapered surface 56. The surface 56 forms a cone frustum about the axis 12. The surface 56 extends between an upper end having a larger diameter $d_{56l}$ and a lower end having a smaller diameter $d_{56s}$. The diameters $d_{56l}$ and $d_{34}$ are equals. The diameter $d_{56s}$ is slightly larger than the diameter $d_{54}$. The surface 56 forms an angle $\beta$ with the axis 12 within a range 17,5° to 25°, preferably within a range 19° to 22°.

By virtue of this arrangement, the portion 32 forms a plurality of clips having a plurality of upper, frontal axial surfaces 58. Each surface 58 is respectively located axially above a snap-fit connector 50. The surfaces 58 form an annular shoulder axially located within the plane of the surface 33.

The protective device 2 includes an inner cavity 60 defined by the surfaces 40, 42 and 58. The cavity 60 is intended to receive the coupling box 9, whereas the snap-fit connectors 50 are intended to surround radially outwardly the pipe 8.

The device 2 includes eight outer axial grooves 62 which are visible on figures 1, 2 and 4. The grooves 62 extend axially between the surfaces 44 and 56. The grooves 62 extend radially inwardly from the surfaces 34, 46 and 56. The grooves 62 are identical and are regularly spread over the circumference of the device 2. In particular, the axial, horizontal cross-section of the grooves 62 have the same individual area $A_{individual}$:

$$A_{individual} = \frac{A_{overall}}{8} = \frac{\pi . c . \left( d_{34}^2 - d_{40}^2 \right)}{2 * 8}$$

wherein $A_{overall}$ is the overall radial cross-section of the outer axial grooves 62 and c is a coefficient within a range 0,4 to 0,6.

The device 2 further includes a metallic cylindrical envelope 64. As may be seen on figure 1, the envelope 64 is cylindrical about the axis 12. The envelope 64 is radially inwardly delimited by an inner cylindrical surface (not referenced) having a diameter substantially equal to the diameter $d_{37}$. The envelope 64 is radially outwardly delimited by a cylindrical outer surface (not referenced) having a diameter substantially equal to the diameters $d_{34}$ and $d_{46}$. The length $l_{64}$ of the envelope 64 along the direction of the vector $\vec{z}$ equals substantially the length $l_{37}$. The envelope 64 is arranged within the groove 36, its inner cylindrical surface contacting the surface 37.

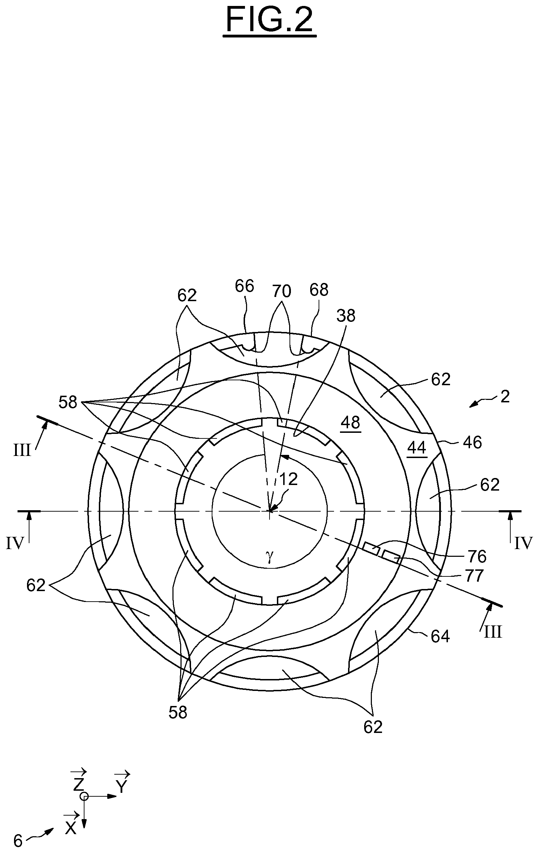

As may be seen in figure 2, the radial cross-section of the envelope 64 forms an arc of a circle about an angle $\gamma$. The angle $\gamma$ is so chosen that tangential ends 66 and 68 of the radial cross-section of the envelope 64 may be accommodated in a same groove 62. In the embodiment with eight grooves depicted on figures 1 to 3, the angle $\gamma$ is within a range 320° to 350°. At both ends 66 and 68, the envelope 64 includes a radial inner protrusion 70.

The device 2 further includes a radio frequency identification chip 72 (RFID chip) which is visible on figure 3. The chip 72 may include data such as the dimensions of the tube and/or of the threaded portions. By virtue of the chip 72, it is not necessary to remove the device 2 from the tube 4 in order to determine such data.

The device 2 includes a first pressure sensor 74 and a first temperature sensor 75 which are visible on figure 3. The sensors 74 and 75 are adjacent to the surface 40. The purpose of the sensor 74 is to monitor the pressure exerted by the portion 28 on the coupling box 9 of a steel tube 4 equipped with the device 2. The purpose of the sensor 75 is to monitor the temperature of the coupling box 9 of a steel tube 4 equipped with the device 2. The device 2 includes a second pressure sensor 76 and a second temperature sensor 77 also represented on figure 3. The sensors 76 and 77 are adjacent to the surface 48. The sensors 76 and 77 aim respectively at detecting the pressure and temperature of the drilling fluid or of the cement, as the case may be. By virtue of the sensors 76 and 77, the installation process of the steel tube 4 may be monitored.

The dimensions of the device 2 depicted on figures 1 to 3 are defined as follows:

$$l_{34} = 150 \text{ mm} +/- 0,5 \text{ mm},$$

$$d_{34} = 114,3 \text{ mm} +/- 0,5 \text{ mm},$$

$$\alpha = 30 \degree +/- 0,5\degree,$$

$$\beta = 20\degree +/- 0,5\degree,$$

$$l_{46} = 75 \text{ mm} +/- 1 \text{ mm},$$

$$l_{54} = 25 \text{ mm} +/- 1 \text{ mm}.$$

With reference to figure 4, the completion tube 4 may be equipped with the device 2 immediately after its manufacture. To do so, the device 2 is placed vertically above (with respect to figure 5) the coupling box 9. The device 2 is vertically lowered so that the surface 52 contacts the surface 10. At this time, the snap-fit connectors 50 start bending radially outwardly. The coupling box 9 slides radially inside the snap-fit connectors 50 and then penetrates inside the cavity 60. The motion of the coupling box 9 with respect to the device 2 ends when the surface 10 contacts axially the surface 42. At this time, the snap-fit connectors 50 are no longer radially outwardly bent and the surface 54 contacts radially the outer periphery of the pipe 8. As a result, the tube 4 is firmly attached to the device 2 and the device 2 surrounds the whole length of the coupling box portion 20, along the direction of the vector $\vec{z}$. By the expression "surrounding", it shall be understood that the device 2 extends upwardly beyond the distal surface 10 and downwardly beyond the proximal surface 11. In the depicted embodiment, the axial length of the coupling box 9 equals the axial length of the cavity 60. As a result, the coupling box 9 contacts both surfaces 42 and 58 axially. Nonetheless, it may be provided a slight play between the coupling box 9 and the surfaces 42 and 58, said play being for instance between 0,5 mm to 2 mm.

The device 2 may thus fully protect the coupling box portion 20 during transport and storage of the tube 4. As well, the wear of the coupling box 9 may be monitored by virtue of the sensors 74 and 75.

Prior to installing the completion tube 4, control lines are inserted in the groove 62 accommodating the ends 66 and 68. Then, the envelope 64 is rotated about the axis 12 so that the ends 66 and 68 are accommodated in a different groove 62. If other control lines shall be inserted in another groove 62, the same steps are repeated. By virtue of the so-designed grooves 62 and envelope 64, control lines may be inserted and maintained in seven grooves 62.

The device 2 still protects the coupling box portion 20 of the tube 4 when it is inserted in a casing string. In particular, an impact between the shoulder surface 11 and an upper axial end of the casing string is avoided by the chamfer formed by the surface 56. The installation process of the tube 4 is also facilitated because there is no longer need to remove the protective device 2.

When the completion tube 4 is lowered inside the casing string, the surfaces 46 and 34 centre the completion tube 4 with respect to an inner periphery of the casing string. This centring is notably enabled by the diameter of the circular radial cross-section of the surfaces 34 and 46 being equal to the diameter of a typical casing tube. As a consequence, there is no need to use a centraliser. Still when the completion tube 4 is lowered inside the casing string, the grooves 62 allow the drilling fluid to flow through the device 2.

After installation of the completion tube 4, a following completion tube (not depicted) may be guided by the funnel formed by the surface 56, so that the male threaded portion of the following completion tube is inserted in the coupling box 9.

The different values of the diameters and of the angles $\alpha$ and $\beta$ may be changed in order to adapt the device 2 to other typical dimensions of completion tubes. In particular, the diameter $d_{34}$ may be so changed to equal 127 mm, 139,7 mm or 177,8 mm with the same tolerance than the initial value. The upper part 30 and the lower part 32 are optional features of the invention. A protective device without the upper part or without the lower part preferably has a length $l_{34}$ increased so as to be within a range 175 mm to 550 mm +/- 0,5 mm.

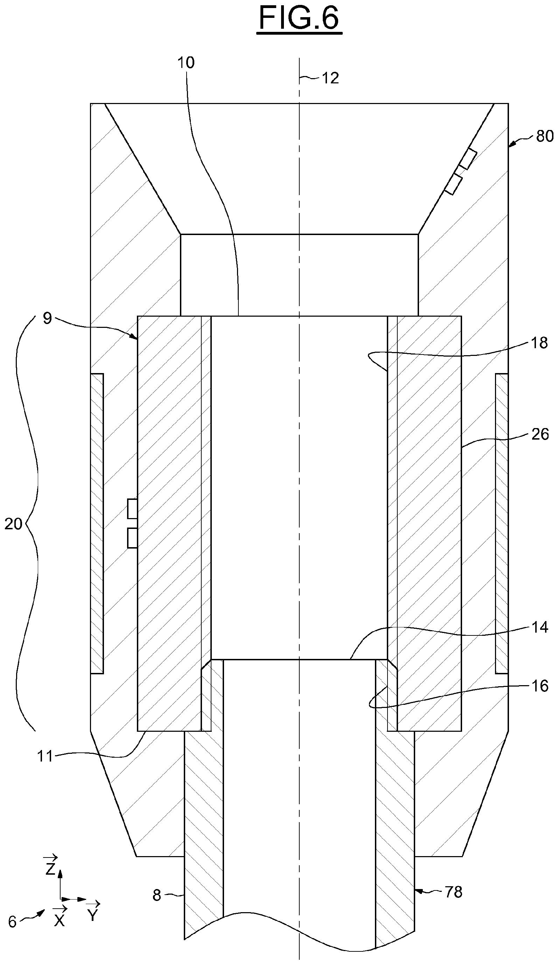

With reference to figure 6, it has been depicted a casing tube 78. The tube 78 is intended to be installed in a casing string placed in a drill hole. Identical elements have the same reference.

The tube 78 is equipped with a protective device 80. The device 80 differs from the device 2 in that the dimensions $d_{34}$, $d_{38}$, $d_{40}$, $d_{48s}$, $d_{48l}$, $d_{54}$, $d_{56s}$, $d_{56l}$, $\alpha$ and $\beta$ are so chosen that the device 80 is adapted to the casing tube 78. In particular, the tube 78 is designed with a diameter $d_{34}'$ of the circular cross-section of the cylindrical surface 34, a length $l_{34}'$ of the surface 34 along the direction of the vector $\vec{z}$, a length $l_{46}'$ of the portion 30 along the direction of the vector $\vec{z}$, a length $l_{54}'$ of the portion 32 along the direction of the vector $\vec{z}$, wherein:

$$d_{34}' = 244{,}475 \text{ mm } +/- 0{,}5 \text{ mm,}$$

$$l_{34}' = 300 \text{ mm } +/- 0{,}5 \text{ mm,}$$

$$l_{46}' = 200 \text{ mm } +/- 0{,}5 \text{ mm,}$$

and

$$l_{54}' = 50 \text{ mm, } +/- 0{,}5 \text{ mm.}$$

The device 80 may be attached to the tube 78 in the same way than the device 2. The installation of the tube 78 in a drill hole may be implemented in the same way than the installation of the tube 4 in a casing string. Therefore, the device 80 has the same advantages when it is used with the casing tube 78 as the device 2 used with the completion tube 4. Furthermore, after installation of the tube 78 in a drill hole, wet cement is allowed to flow through the device 80.

As well as the device 2, the device 80 may have different dimensions in order to be adapted to other typical dimensions of casing tubes and drill hole. In particular, the diameter $d_{34}'$ may be so changed to equal 339,725 mm with the same tolerance than the initial value.

In view of the foregoing, the devices 2 and 80 improve the protection of the coupling box portion 20 of the completion tube 4 or the casing tube 78, as the case may be, and facilitate an installation process of said tubes in a casing string or in a drill hole. The devices 2 and 80 may be used in an onshore well as well as on an offshore well.

## Claims

1. Protective device (2, 80) for a coupling box portion (20) of a steel tube (4, 78) intended for use in a tubular hydrocarbon working string, the device (2, 80) including a cylindrical sleeve portion (28) defining an inner cavity (60) intended to receive the coupling box portion (20), **characterized in that** the protective device (2, 80) is so configured to surround the coupling box portion (20).

2. Protective device (2, 80) according to claim 1, wherein the axial length ($l_{34}$, $l_{34}'$) of the cylindrical sleeve portion (28) is within a range 145 mm to 305 mm.

3. Protective device (2, 80) according to claim 1 or 2, wherein the cylindrical sleeve portion (28) is radially outwardly delimited by an outer cylindrical surface (34) having a circular radial cross-section.

4. Protective device (2, 80) according to claim 3, wherein the diameter ($d_{34}$) of the radial cross-section of the outer cylindrical surface (34) is within a range 113,3 mm to 115,3 mm, or within a range 126 mm to 128 mm, or within a range 138,7 mm to 140,7 mm, or within a range 176,8 mm to 178,8 mm, or within a range 243,475 mm to 245,475 mm, or within a range 338,725 mm to 340,725 mm.

5. Protective device (2, 80) according to any of claims 1 to 4, wherein the inner cavity (60) comprises a distal shoulder surface (42) and a proximal shoulder surface (58).

6. Protective device (2, 80) according to claim 5, wherein the proximal shoulder surface (58) is part of at least two snap-fit connectors (50), the number of snap-fit connectors (50) being preferably within a range 4 to 12, and more preferably within a range 6 to 10.

7. Protective device (2, 80) according to any of claims 3 to 6, further including at least one outer axial groove (62) being radially adjacent to the outer cylindrical surface (34) of the cylindrical sleeve portion (28), and wherein the number of outer axial grooves (62) is preferably within a range 4 to 12, and more preferably within a range 6 to 10.

8. Protective device (2, 80) according to claim 7, wherein an overall radial cross-section area ($A_{overall}$) of said at least one outer axial groove (62) equals an area of the radial cross-section of the cylindrical sleeve portion (28) multiplied by a coefficient c, the coefficient c being within a range 0,4 to 0,6.

9. Protective device (2, 80) according to claim 7 or 8, wherein the cylindrical sleeve portion (28) includes an annular groove (36) extending radially inwardly from an outer surface (34) of the cylindrical sleeve portion (28), the device (2, 80) including a metallic cylindrical envelope (64) located within the annular groove (36).

10. Protective device (2, 80) according to claim 9, wherein the radial cross-section of the metallic cylindrical envelope (64) forms an arc of a circle about the axial direction ($\vec{z}$) of the cylindrical sleeve portion (28), the arc ($\gamma$) being within a range 320° to 350°.

**11.** Protective device (2, 80) according to claim 10, wherein the radial cross-section of the metallic cylindrical envelope (64) is tangentially delimited by a first end (66) and by a second end (68), at least one of the first and second ends (66, 68) radially inwardly protruding so as to form a means for rotationally locking the metallic cylindrical envelope (64) with respect to the cylindrical sleeve portion (28).

**12.** Protective device (2, 80) according to any of claims 1 to 11, further including at least one hollow portion axially protruding from the cylindrical sleeve portion (28), the hollow portion being chosen among:

a hollow proximal portion (32) radially inwardly delimited by an internal cylindrical surface (54) and radially outwardly delimited by an external tapered surface (56), the external tapered surface (56) forming an angle ($\beta$) within a range 15° to 50° with respect to the axis (12) of the internal cylindrical surface (54), and
a hollow distal portion (30) radially outwardly delimited by an external cylindrical surface (46) and radially inwardly delimited by an internal tapered surface (48), the internal tapered surface (48) forming an angle ($\alpha$) within a range 20° to 45° with respect to the axis (12) of the external cylindrical surface (46),
the axial length ($l_{54}$) of the hollow proximal portion (32) being preferably within a range 20 mm to 55 mm, the axial length ($l_{46}$) of the hollow distal portion (30) being preferably within a range 70 mm to 205 mm.

**13.** Protective device (2, 80) according to any of claims 1 to 12, further including a radio frequency identification chip (72).

**14.** Protective device (2, 80) according to any of claims 1 to 13, further including a pressure or temperature sensor (74, 75, 76, 77), the sensor (74, 75, 76, 77) being preferably arranged on the cylindrical sleeve portion (28), and more preferably arranged on an internal tapered surface (48) of a hollow distal portion (30) axially protruding from the cylindrical sleeve portion (28).

**15.** Protective device (2, 80) according to any of claims 1 to 14, being made of a material including a polymer.

**16.** Protective device (2, 80) according to any of claims 1 to 15, being manufactured by an additive manufacturing means.

**17.** Steel tube (4, 78) intended for use in a tubular hydrocarbon working string, preferably as a completion tube (4), said tube (4, 78) including a male portion and a coupling box portion (20) so adapted to receive a male portion of another steel tube, and a protective device (2, 80) according to any of claims 1 to 16.

# FIG.1

# FIG.2

# FIG.3

# FIG.4

# FIG.5

## FIG.6

Europäisches
Patentamt

European
Patent Office

Office européen
des brevets

## EUROPEAN SEARCH REPORT

Application Number

EP 18 30 5517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 4 205 707 A (LUNDGREN ROBERT S [US])<br>3 June 1980 (1980-06-03)<br>* figures 1-5 *<br>* column 1, lines 1-21 *<br>* column 1, line 62 - column 2, line 52 *<br>* column 3, lines 18-41 *<br>----- | 1-5,<br>12-17<br>6<br>10 | INV.<br>E21B17/10<br>B65D59/06<br>F16L57/00<br>F16L57/06 |
| X<br><br><br>Y<br>A | US 3 945 446 A (OSTERTAG ALFRED ET AL)<br>23 March 1976 (1976-03-23)<br><br>* figures 4-5 *<br>* column 1, lines 1-23 *<br>* column 2, lines 45-50 *<br>* column 3, lines 15-68 *<br>----- | 1-5,7,8,<br>12-14,<br>16,17<br>9,10<br>11 | |
| X | JP H05 75582 U (N.A.)<br>15 October 1993 (1993-10-15)<br>* figure 6 *<br>* paragraphs [0001] - [0003], [0005] -<br>[0006], [0014] - [0015] *<br>----- | 1-5,<br>12-17 | |
| Y | EP 0 728 976 A1 (VICTAULIC PLC [GB])<br>28 August 1996 (1996-08-28)<br>* figure 1 *<br>* column 1, lines 1-40 *<br>* column 2, line 54 - column 3, line 8 *<br>* column 5, line 34 - column 6, line 3 *<br>* claim 4 *<br>----- | 6 | TECHNICAL FIELDS<br>SEARCHED (IPC)<br><br>E21B<br>B65D<br>F16L |
| Y<br><br><br>A | GB 2 393 984 A (POLYOIL LTD [GB];<br>WELLTONIC LTD [GB])<br>14 April 2004 (2004-04-14)<br>* figures 1-2,5-6 *<br>* page 1, lines 1-15 *<br>* page 7, lines 12-28 *<br>* page 8, lines 23-28 *<br>* page 9, line 26 - page 10, line 10 *<br>----- | 9,10<br><br><br>11 | |

The present search report has been drawn up for all claims

| Place of search | Date of completion of the search | Examiner |
|---|---|---|
| The Hague | 1 October 2018 | Pasquini, Matteo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 561 218 A1**

## ANNEX TO THE EUROPEAN SEARCH REPORT
## ON EUROPEAN PATENT APPLICATION NO.

EP 18 30 5517

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2018

| Patent document cited in search report | | Publication date | Patent family member(s) | | Publication date |
|---|---|---|---|---|---|
| US 4205707 | A | 03-06-1980 | GB | 2038273 A | 23-07-1980 |
| | | | US | 4205707 A | 03-06-1980 |
| US 3945446 | A | 23-03-1976 | AU | 6546474 A | 14-08-1975 |
| | | | CA | 983472 A | 10-02-1976 |
| | | | DE | 2311359 A1 | 19-09-1974 |
| | | | FR | 2220664 A1 | 04-10-1974 |
| | | | GB | 1430495 A | 31-03-1976 |
| | | | JP | S507701 A | 27-01-1975 |
| | | | JP | S5248921 B2 | 13-12-1977 |
| | | | US | 3945446 A | 23-03-1976 |
| JP H0575582 | U | 15-10-1993 | JP | 2577182 Y2 | 23-07-1998 |
| | | | JP | H0575582 U | 15-10-1993 |
| EP 0728976 | A1 | 28-08-1996 | DE | 69601273 D1 | 18-02-1999 |
| | | | DE | 69601273 T2 | 02-09-1999 |
| | | | EP | 0728976 A1 | 28-08-1996 |
| | | | GB | 2298254 A | 28-08-1996 |
| | | | GB | 2323145 A | 16-09-1998 |
| | | | NO | 960697 A | 23-08-1996 |
| GB 2393984 | A | 14-04-2004 | NONE | | |

EPO FORM P0459

For more details about this annex : see Official Journal of the European Patent Office, No. 12/82